# EUROPÄISCHE PATENTSCHRIFT

(11) **EP 0 388 668 B1**
(45) Veröffentlichungstag und Bekanntmachung des Hinweises auf die Patenterteilung: **14.07.1993**
(21) Anmeldenummer: 90103850.5
(22) Anmeldetag: 28.02.1990
(51) Int. Cl.: B65G 47/36, B65G 47/61

(54) **Einhängevorrichtung für einen Hängeförderer**
Suspending device for an overhead conveyor
Dispositif d'accrochage pour un transporteur aérien

(30) Priorität: 18.03.1989 DE 3909002
(43) Veröffentlichungstag der Anmeldung: 26.09.1990
(73) Patentinhaber: DÜRKOPP ADLER AKTIENGESELLSCHAFT, D-33602 Bielefeld (DE)
(72) Erfinder: Grube, Erwin, D-4800 Bielefeld 18 (DE); Kuhlmann, Walter, D-4937 Lage (DE); Schneuing, Ralf, D-4446 Hörstel (DE)
(74) Vertreter: Rehmann, Klaus-Thorsten, Dipl.-Ing.

(56) Entgegenhaltungen:
- AT-B- 233 469
- AT-B- 245 484

## Beschreibung

Die Erfindung betrifft eine Einhängevorrichtung für einen Hängeförderer nach dem Oberbegriff des Anspruchs 1. Eine Vielzahl solcher Einhängevorrichtungen sind an der Antriebskette des Förderers befestigt und dienen beispielsweise zur Aufnahme eines Kleiderbügels, um die auf dem Kleiderbügel hängenden Bekleidungsstücke mit dem Förderer an einen bestimmten Ablageplatz zu transportieren. Üblicherweise werden die Einhängevorrichtungen an einer Aufgabestation, die seitlich der Förderstrecke angeordnet ist, vorbeigeführt und an der Aufgabestation wird jeweils ein Bügel selbsttätig in die Einhängevorrichtung übergeben. An der für das Kleidungsstück bestimmten Stelle wird die Einhängevorrichtung geöffnet und der Bügel abgeworfen oder anderweitig übergeben.

Dazu sind klammerartige Einhängevorrichtungen bekannt, die in geschlossenem Zustand eine Auflagefläche für den Haken des Kleiderbügels bilden und an definierter Stelle (Position) geöffnet werden, so daß der Bügel herunterfällt bzw. auf eine Abwurfstange gleitet.

Die DE-A- 21 58 744 offenbart eine Einhängevorrichtung, die durch zwei gabelförmig ineinandergreifende Schenkel gebildet wird, die in geschlossenem Zustand eine V-förmige Stellung zueinander einnehmen, so daß der Kleiderbügel in der Mitte beider Schenkel gehalten wird. Einer der Schenkel ist mit einem Öffnungshebel verbunden der an der Abwurfstelle über eine am Förderstrang ausgebildeten Nase läuft und dabei nach außen gedrückt wird, wodurch dieser Schenkel soweit nach unten klappt, daß er mit dem anderen Schenkel fluchtet und der Kleiderbügel an dem weggeklappten Schenkel herab auf eine Speicherstange gleiten kann.

Eine solche Einhängevorrichtung ist konstruktiv aufwendig. Eine Bügelabgabe ist erst dann möglich, wenn die beiden Schenkel zueinander fluchten und dadurch die stabile Lage des Kleiderbügels aufgehoben wird, was eine exakte Abstimmung von Nase und Öffnungshebel erfordert. Außerdem ist es möglich, daß sich der eingehängte Bügel während des Transports verdreht und sich dabei so mit den Schenkeln verkantet, daß er nicht mehr selbsttätig herunterrutscht.

Es sind außerdem Einhängevorrichtungen bekannt, bei denen die Bügel in einem entgegen die Transportrichtung bzw. nach oben schwenkbaren Haken eingehängt werden. An der AbwurfsteIle wird dieser Haken durch einen mit ihm verbundenen Öffnungshebel zurückgeschwenkt, so daß der Kleiderbügel aus dem Haken herausgleiten kann.

Durch horizontale Krafteinwirkung auf den eingehängten Bügel während des Transports, kann dieser auf dem Haken soweit wandern, daß der spätere Öffnungswinkel nicht ausreichend ist, um den Bügel von selbst herausgleiten zu lassen. Ebenso kann sich der Kleiderbügel auch in dieser Einhängevorrichtung verkanten. Wenn keine schweren Kleidungsstücke auf dem Bügel hängen, kann es durch statische Aufladung während des Transports dazu kommen, daß der Bügel am Haken kleben bleibt und nicht selbsttätig abgeworden werden kann.

Die DE-U-18 73 579 offenbart eine Einhängevorrichtung mit einer U-förmigen Profilschiene zur gleichzeitigen Aufnahme mehrerer Kleiderbügel. Dabei ist die Profilschiene schanierartig auf einer sich in Fahrtrichtung erstreckenden Achse gelagert. Damit sich die Einhängevorrichtung nicht allein durch die Kraft der auf der Profilschiene ruhenden Bügelhaken öffnet ist zusätzlich ein Stützglied vorgesehen, das erst verschwenkt werden muß, bevor sich die Einhängevorrichtung öffnen kann.

Aus der AT-A-233 469 ist eine Einhängevorrichtung zur Aufnhame mehrerer Bügel bekannt. Diese Einhängevorrichtung ist in Längsrichtung beidseitig geschlossen. Eine automatische Übergabe der Bügel in die Einhangevorrichtung ist daher erschwert.

Die EP-A-307 045 offenbart eine hakenförmige, dreiteilige Einhängevorrichtung, bei der der Bügelhaken auf einem verschwenkbar gelagerten Trägerhaken transportiert wird. Diese Einhängevorrichtung baut mechanisch recht aufwendig, weil der Trägerhaken mittels Federkraft in seiner Transportstellung gehalten werden muß, wobei die wirksame Federkraft mindestens so groß sein muß wie die Gewichtskraft des zu transportierenden Gutes, um ein unbeabsichtigtes Öffnen der Einhängevorrichtung zu verhindern. Das gesteuerte Öffnen erfolgt gegen die Gewichtskraft des Transportgutes und die Federkraft und deshalb ist ein entsprechend dimensioniertes Gestänge vorgesehen. Außerdem muß, um ein Herausfallen des Bügelhakens während des Transportes zu verhindern, eine zusätzliche Verschlußklappe vorgesehen werden. Dadurch daß die Einhängevorrichtung allseits geschlossen ist, können die Bügelhaken nur in Transportrichtung übernommen werden.

Der Erfindung liegt die Aufgabe zugrunde, eine Einhängevorrichtung der genannten Art zu schaffen mit der eine einfache Auf- und Abgabe ermöglicht wird, die eine hohe Funktionssicherheit aufweist, einfach aufgebaut und kostengünstig herstellbar ist.

Die Lösung der Aufgabe erfolgt bei einer gattungsgemäßen Einhängevorrichtung durch die kennzeichnenden Merkmale des Anspruchs 1.

Da der Bügelhaken während des Transports aufgrund seines Eigengewichts auf dem Grundkörper ruht und sich an der die Aufgabe der Kleiderbügel in die Einhängevorrichtung steuernde, die Sicherung während des Transports übernehmende und die einfache Abgabe des Bügelsermöglichende Klappe, die am Grundkörper schwenkbar befestigt ist, abstützt, wurde eine unter allen Bedingungen befriedigende Lösung gefunden. Der Bügelhaken wird außerdem beim Öffnen angestoßen und aus seiner Ruhelage bewegt, so daß ein Klebenbleiben aufgrund statischer Aufladung ausgeschlossen wird.

Mit der Ausgestaltung nach Anspruch 2 ist sichergestellt, daß sich der Bügelhaken immer in einer definierten Position befindet.

Das Merkmal nach Anspruch 3 sorgt für eine verminderte Reibung zwischen Bügel und der Einhängevorrichtung.

Gemäß Anspruch 4 ist die Einhängevorrichtung so ausgestaltet, daß der Kleiderbügelhaken sicher in seine Transportlage geführt wird.

Ansprüche 5 und 6 tragen jeweils dazu bei, daß sich der Bügelhaken bei der Aufgabe oder während des Transports nicht verkanten bzw. verklemmen kann.

Die Ausgestaltung nach Anspruch 7 verhindert, daß ein einmal aufgenommener Bügel aufgrund einer auf ihn entgegen der Transportrichtung einwirkenden Kraft aus der Vorrichtung geschoben wird.

Mit der Ausführungsform nach Anspruch 8 wird erreicht, daß bei einer auf den Bügel in Transportrichtung einwirkenden Kraft, auf die Klappe an der Schließrichtung entgegen gerichtetes Moment wirkt, so daß sich die Klappe nicht öffnen kann.

Das Merkmal nach Anspruch 9 stellt sicher, daß die Klappe selbsttätig schließt und in Grundstellung eine zu überwindende Verschlußkraft vorliegt (Selbstverriegelung).

Die Ausgestaltung nach Anspruch 10 gewährleistet, daß der Bügel haken vom Aufgabedorn großflächig abgestreift wird und sich während der Übergabe nicht verkanten kann.

Weitere vorteilhafte Ausgestaltungen sind den übrigen Unteransprüchen entnehmbar.

Anhand einer Zeichnung soll die Erfindung näher beschrieben werden.

Es zeigt:
Fig. 1 eine perspektivische Darstellung der Einhängevorrichtung,
Fig. 2 die Seitenansicht der Einhängevorrichtung im Teilschnitt,
Fig. 3 die Vorderansicht der Einhängevorrichtung,

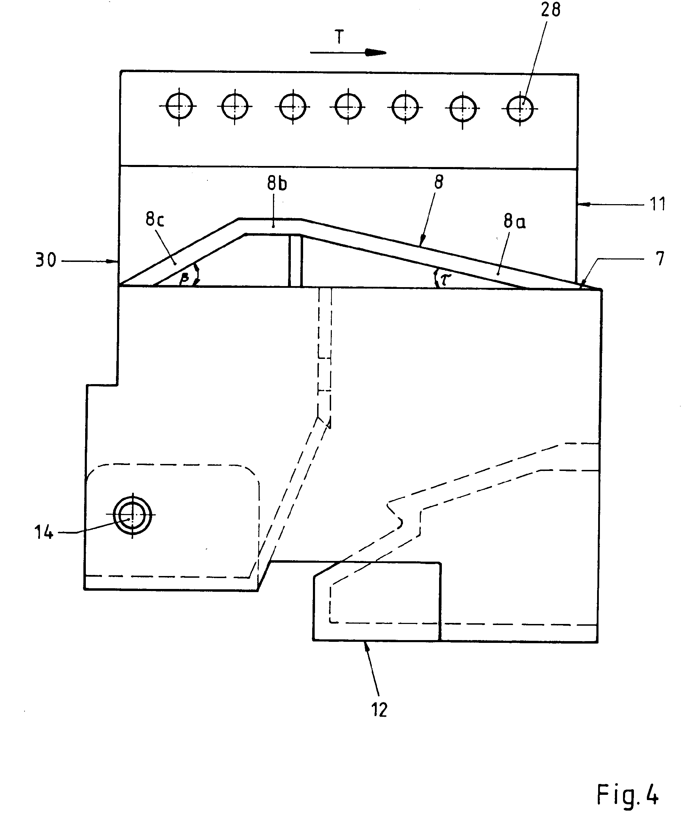

Fig. 4 die Rückansicht des Grundkörpers,
Fig. 5 einen Längsschnitt des Grundkörpers gemäß der Schnittlinie A-A,
Fig. 6 einen Teilschnitt des Grundkörpers gemäß der Linie B-B,

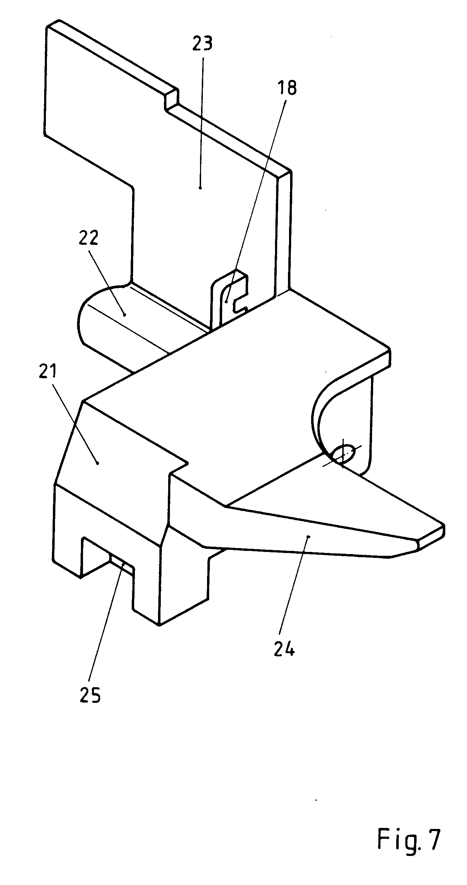

Fig. 7 die Einzeldarstellung der Klappe in perspektivischer Darstellung,

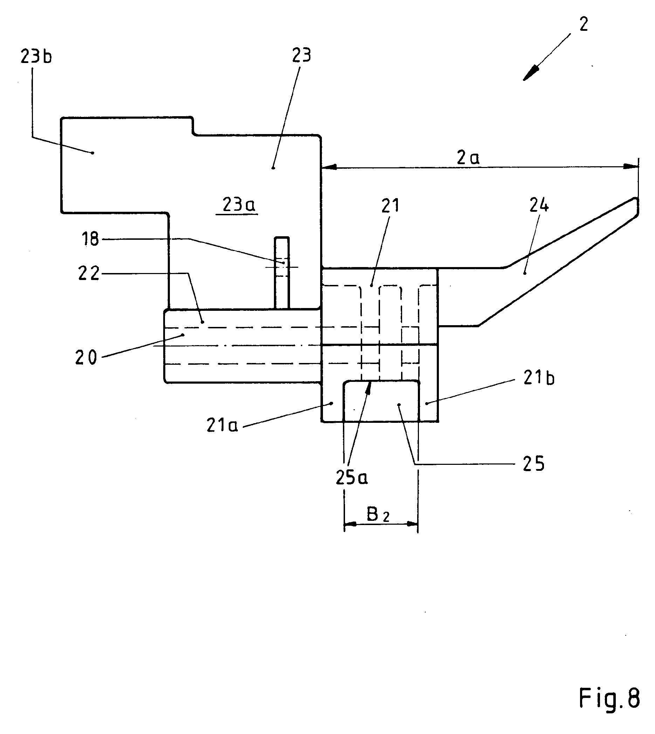

Fig. 8 die Klappe in Seitenansicht nach Fig. 2.

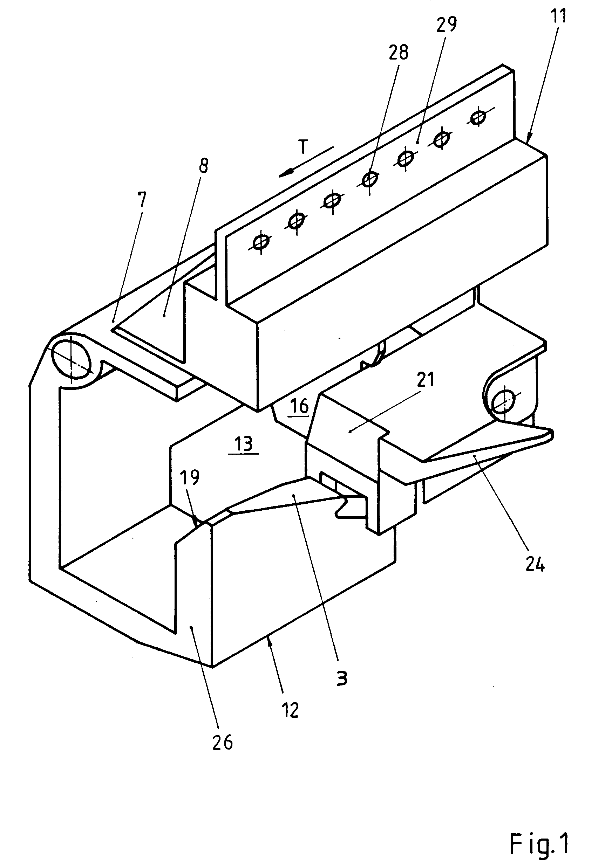

Fig. 1 zeigt die Gesamtansicht der dreiteiligen hauptsächlich aus Kunststoff bestehenden Einhängevorrichtung in Grundstellung. Am Grundkörper 1 ist über den Bolzen 14 die Klappe 2, die über eine Zugfeder 15 in Grundstellung gehalten wird, schwenkbar befestigt.

Der Grundkörper 1 weist im Querschnitt im wesentlichen ein hohles Rechteckprofil, das zu der Seite, von der aus die Kleiderbügel in die Einhängevorrichtung eingegeben werden, geöffnet ist, auf. An seiner Oberseite ist der Grundkörper 1 mit einem Vorsprung 11, mittels dessen die Einhängevorrichtung mit der hier nicht dargestellten an der Antriebskette des Hängeförders kraft- oder formschlüssig befestigten Tägervorrichtung verbunden wird, versehen.

Die in der Beschreibung verwendeten Begriffe "vorn" und "hinten" beziehen sich auf die Transportrichtung T in Einbaulage, wobei mit "vorn" als "in Transportrichtung" gemeint ist. Dasselbe gilt für die Begriffe "oben" und "unten".

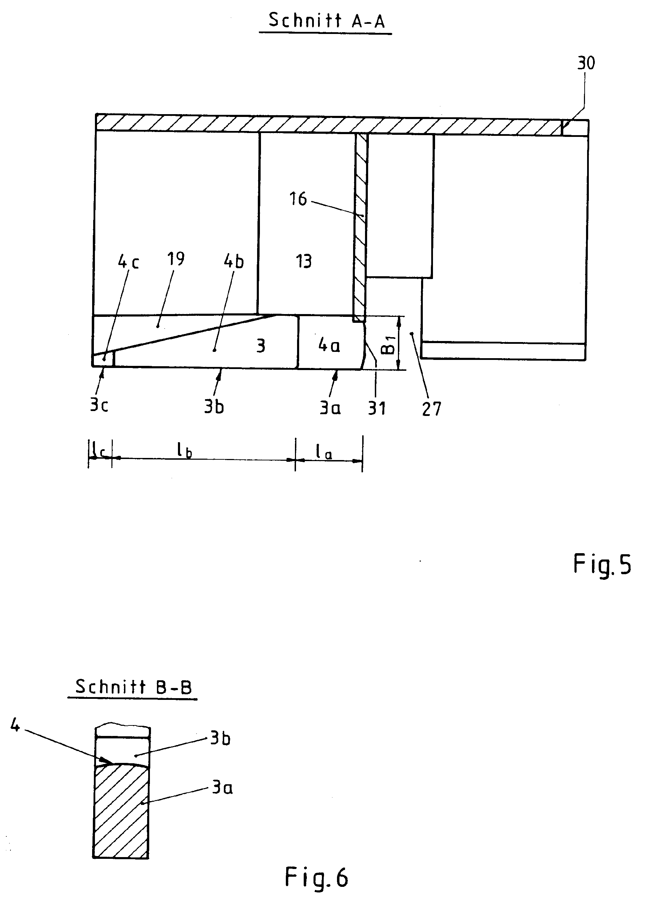

Die Klappe 2 ist an dem hinteren Ende (in Fig. 5 rechts) des Grundkörpers 1 über den Bolzen 14 schwenkbar an ersterem befestigt. Die Klappe 2 erstreckt sich über die vollständige Breite und annähernd die halbe Länge des Grundkörpers 1 und wird durch die Zugfeder (15) in Grundstellung, d.h. Schließstellung gehalten. Dazu ist die Zugfeder 15 mit ihrem einen Ende an dem Auge 17, das an der innerhalb des Querschnittes des Grundkörpers 1 vorgesehenen Wand 16 herausgearbeitet ist, und mit dem anderen Ende an dem entsprechend an der Klappe 2 vorgesehenen Auge 18 angelenkt.

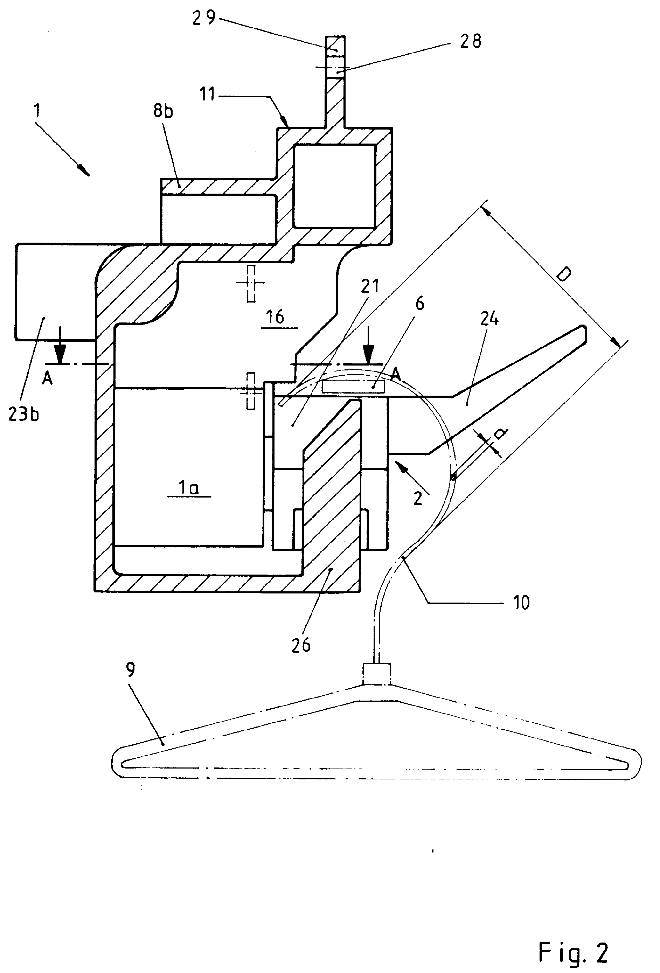

Vor der Klappe 2 ist am Grundkörper 1 an der Seite, an der die Eingabe der Kleiderbügel 9 erfolgt, in Längsrichtung eine Schräge 3 ausgebildet, auf der die Klappe 2 in Grundstellung aufliegt. Die Schräge 3 verläuft so, daß sich ihre tiefste Stelle an der Klappe 2 und die höchste Stelle am vorderen Ende des Grundkörpers 1 befindet. DerAuflagepunktderKlappe 2 auf der Schräge 3 liegt tiefer als deren Drehpunkt. Diese Schräge 3 wird durch drei hintereinander angeordnete Teilschrägen 3a, 3b, 3c gebildet. Aus Fig. 2 und 5 wird deutlich, daß die einzelnen Schrägen 3a, 3b, 3c unterschiedliche Breiten in ihrer jeweiligen Oberseite (Fig. 5) aufweisen, wobei die der Klappe 2 zugeordnete Schräge 3a über ihre vollständige Länge La die durch die Wandstärke B1 maximal mögliche Breite einnimmt, während die Breite der Oberseite der Schräge 3b mit der Entfernung von der Klappe 2 abnimmt. Dies wird im Ausführungsbeispiel dadurch möglich, daß die Wandstärke B1 durch eine weitere, bezogen auf den Grundkörper 1 von außen oben nach innen unten (und somit in Querrrichtung) im Winkel von etwa 45° verlaufende Abschrägung 19 reduziert wird. Diese Abschrägung 19 kann, ebenso wie die Schrägen 3a, 3b, 3c, durch Fräsen oder aber entsprechende Ausgestaltung einer Spritzform schon bei der Herstellung erzeugt werden. Die Teilschräge 3a weist im Querschnitt eine gebogene Oberfläche auf (Fig. 6). Der Übergang von der Teilschräge 3a zur Teilschräge 3b wird durch einen Absatz 5 gebildet. Die Höhe H dieses Absatzes 5 entspricht im wesentlichen dem Drahtdurchmesser des einzuhängenden Kleiderbügelhakens 10. Durch diese Ausgestaltung ist sichergestellt, daß der aufgenommene Kleiderbügel aufgrund einer auf ihn einwirkenden gegen die Transportrichtung T wirkenden Kraft aus der Einhängevorrichtung nicht herausgeschoben werden kann. Die in Längsrichtung ausgebildeten Einzelschrägen 3a, 3b, 3c weisen unterschiedliche Steigungen auf, wobei der Betrag der Steigung, d.h., der jeweilige zur Horizontalen eingenommene Winkel a1, a2, a3 mit der Entfernung der Teilstrecke 3a, 3b, 3c zur Klappe 2 hin abnimmt. Es hat sich als vorteilhaft erwiesen, wenn der Winkel a1 in etwa 30°, der Winkel a2 in etwa 20° und der Winkel a3 nahezu 0° aufweist. Die Gesamtlänge L der Schräge 3 ist so groß, daß sie den Durchmesser D eines aufzunehmenden Kleiderbügelhakens 10 überschreitet. Dadurch wird erreicht, daß für den Fall, der Bügel 9 drehe sich während des Transports im Förderer, der Haken 10 sich nicht selbsttätig aus der Einhängevorrichtung heraushebeln kann.

Die Klappe 2, die in Grundstellung auf der am tiefsten liegenden Teilschräge 3a aufliegt, ist zweckmäßigerweise als einstückiges Kunststoffteil ausgestaltet und besteht aus dem Sperrkörper 21, der sich im wesentlichen in Längsrichtung erstreckt, dem dazu rechtwinklig verlaufenden Drehkörper 22, der sich an das hintere Ende des Sperrkörpers 21 anschließt und eine Durchgangsbohrung 20 aufweist, die zur Aufnahme des Bolzens 14 und somit zur Befestigung des Klappe 2 im Grundkörper 1 dient.

An den Drehkörper 22 schließt sich ein im wesentlichen nach oben erstreckender, dünnwandiger Flügel 23 an, der in Grundstellung mit seiner Vorderseite 23a gegen die hintere Wandung 30 des Grundkörpers anschlägt. Das obere Ende 23b des Flügels 23 ist L-förmig nach außen geführt und ragt über die Wand 30 des Grundkörpers 1 hinaus. Auf der der Aufgabeseite zugewandten Seite des Sperrkörpers 21 schließt sich an dessen oberen Ende ein im wesentlichen in die Breite erstreckender Flügel 24 an, der nach etwa einem Drittel waagerechter Erstreckung in einem Winkel von etwa 40° nach oben abknickt. Die Gesamtbreite 2a von Sperrkörper 21 und Flügel 24 ist in zweckmäßiger Weise größer als der Durchmesser D des aufzunehmenden Kleiderbügelhakens 10. Vorne am Sperrkörper 21 ist eine rechteckige Aussparung 25 vorgesehen, deren Breite B2 etwas größer als die Breite B1 der Teilschräge 3a am Grundkörper 1 ist. Mit der durch die Aussparung 25 gebildeteten Fläche 25a liegt die Klappe 2 auf der Teilschräge 3a auf, wobei die Seitenflächen 21a, 21 b beidseitig der Teilschräge 3a innen und außen am Grundkörper 1 entlanglaufen.

Die Tiefe der Aussparung 25 ist so gewählt, daß die Klappe 2 bei ihrer Schwenkbewegung nicht an der Stirnseite 30 der Schräge 3 anschlägt.

Am Flügel 23 ist ein Auge 18 ausgebildet, in das die Zugfeder 15 klappenseitig eingehängt wird. Der Flügel 23 wirkt mit einer am Förderer vorgesehenen Aufstoßeinrichtung zusammen, an der die Einhängevorrichtung vorbeigeführt und durch Zurückschwenken der Klappe 2 geöffnet wird.

Etwa in der Mitte der Längsseite am Ende der Teilschräge 3a ist die Seitenwand 26 durch einen senkrechten Schlitz 27 unterbrochen. Der Schlitz 27 reicht über die vollständige Breite der Unterseite 12 des Grundkörpers 1 und hat in etwa die doppelte bis dreifache Breite der Hakenstärke d. Die durch den Schlitz 27 an der Unterseite 12 gebildete Ausnehmung 13 ist parallel zur Teilschräge 3a in Transportrichtung T verbreitert und zwar soweit, daß die Ausnehmung 13 annähernd quadratisch ist. Damit ist sichergestellt, daß der herausfallende Kleiderbügelhaken 10 nicht verkanten und in der Einhängevorrichtung hängenbleiben kann. Zu diesem Zweck ist außerdem die in Höhe des hinteren Endes der Teilschräge 3a im Querschnitt des Grundkörpers 1 vorgesehene Wand (16) etwa ab halber Höhe im Winkel von ca. 45° nach hinten und unten weggeführt.

Auf der Oberseite 7 des Grundkörpers 1 ist neben dem Vorsprung 11 eine Steuerkurve 8 angeordnet.

Diese Steuerkurve 8 wirkt mit dem Hebel einer dem Förderer zugeordneten Vereinzelungsvorrichtung zusammen. Durch die Steuerkurve 8 wird der hier nicht näher dargestellte Hebel angehoben, wodurch in der Vereinzelungsvorrichtung ein Gesperre gelöst und ein einzelner Bügel 9 freigegeben wird, der dann über eine schräg nach unten verlaufende Schiene, die in ihrem Auslauf in einen parallel zum Hängeförderer übergehenden Dorn 6 endet, herabrutscht, von wo aus er von derselben, den Vereinzelungsvorgang ausgelösten Einhängevorrichtung selbsttätig übernommen wird. Die Steuerkurve 8 wird durch mehrere hintereinander angeordnete schiefe Ebenen 8a, 8b, 8c, gebildet. Die in Transportrichtung T erste Ebene 8a ist ansteigend, d.h. der hebel der Vereinzelungsvorrichtung wird durch ihre Einwirkung angehoben, die letzte Ebene 8c ist abfallend, so daß der Hebel durch ihre Einwirkung wieder in seine Ursprungslage zurückgeführt wird. Dabei ist der von der nach aufwärts gerichteten Ebene 8a und der Oberfläche 7 eingeschlossene Winkel τ kleiner als von der abwärts gerichteten Ebene 8c und der Oberfläche 7 eingeschlossene Winkel β. Es hat sich als vorteilhaft herausgestellt, wenn τ ≈ 0,5 β. Im Ausführungsbeispiel ist die mittlere Ebene 8b absolut waagerecht ausgebildet, was den Vorteil hat, daß sich für die Vereinzelungsvorrichtung längere Steuer(Schalt-)zeiten ergeben.

Mit dem ebenfalls auf der Oberseite 7 des Grundkörpers 1 ausgebildeten Absatz 11 wird die Einhängevorrichtung an der Trägervorrichtung (nicht gezeigt) befestigt. Hierzu ist auf dem Absatz 11 über die volle Länge ein schmaler Steg 29 ausgebildet, in dem in regelmäßigen Abständen eine Mehrzahl von Durchgangsbohrungen 28 eingebracht sind. Mit diesem Steg 29 wird die Einhängevorrichtung in die entsprechend ausgebildete Trägervorrichtung eingeführt und verschraubt. Durch die Mehrzahl der Bohrungen ist es möglich, die relative Lage von , Einhängevorrichtung und Trägervorrichtung zueinander zu variieren. In bekannter Weise ist die Trägervorrichtung an der Transportkette des Förderers verbunden, so daß es mit der hier gewählten Ausstaltung möglich wird, Toleranzen, die bei der Kettenfertigung entstanden sind, auszugleichen, wodurch die einzelnen Einhängevorrichtungen innerhalb eines Förderers immer einen definierten Abstand zueinander haben, was insbesondere für die automatische Steuerung der Auf-und Abgabe der Kleiderbügel von großer Wichtigkeit ist.

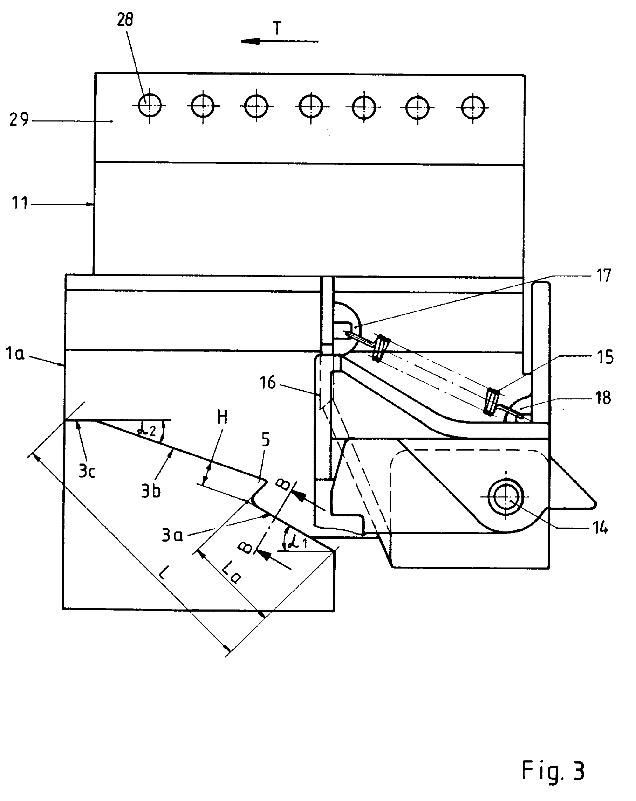

Die Funktionsweise der erfindungsgemäßen Einhängevorrichtung soll kurz beschrieben werden:
Der zu übergebene Kleiderbügel 9 hängt auf einem parallel zur Transportrichtung T verlaufenden Aufgabedorn 6. Die Einhängevorrichtung wird an dem Aufgabedorn 6 so vorbeigeführt, daß dieser mit geringem Abstand zur Klappe 2 passierbar ist. Dabei wird, wie in Fig. 2 dargestellt, der Aufgabedorn 6 zwischen dem Grundkörper 1 und dem an der Klappe 2 ausgebildeten Flügel 24 eingeschlossen.
Wenn die Einhängevorrichtung weit genug unter dem Aufgabedorn 6 hindurchtransportiert wurde, schlägt der Haken 9 des Kleiderbügels 10 gegen die im Querschnitt des Grundkörpers 1 eingelassene Wand 16 und den in derselben Höhe liegenden Flügel 24 der Klappe 2, wird beim Weitertransport vom Aufgabedorn 6 abgestreift und fällt auf die Teilschrägen 3a oder 3b, an denen er gegebenenfalls soweit heruntergleitet bis er an der Klappe 2 am Sperrkörper 21 zur Anlage kommt. Da der Anlagepunkt des Bügelhakens 10 tiefer liegt als der durch den Bolzen 14 gebildete Drehpunkt der Klappe 2 (vergleiche Fig. 3) entsteht bei einer auf den Bügel 1 entgegen die Transportrichtung T einwirkenden Kraft ein dem Uhrzeigersinn entgegengerichtetes Moment, wodurch die Klappe 2 stärker auf die Schräge 3a gedrückt wird und die Verschlußkraft ansteigt. Durch den während der Bügelaufgabe über der Klappe 2 befindlichen Aufgabedorn 6 wird verhindert, daß sich die Klappe 2 unbeabsichtigt öffnen kann, da sie sofort am Aufgabedorn 6 anschlagen würde. Eine fehlerhafte Aufgabe wird dadurch wirkungsvoll ausgeschlossen.

Wenn das auf dem Bügel 10 hängende nicht dargestellte Kleidungsstück am vorgesehenen Abgabeort angelangt ist, schlägt ein entsprechend vorgesehene Steuerglied gegen die am Flügel 23 der Klappe 2 ausgebildeten, seitlich über den Grundkörper 1 hinausragenden Flügelspitze 23b an, so daß beim Weitertransport die Klappe 2 nach hinten geschwenkt wird. Dabei ist die Öffnungsbewegung des Sperrkörpers 21 anfangs in Transportrichtung T gerichtet. Das hat zur Folge, daß der vor dem Sperrkörper anliegende Bügelhaken 10 auf der Teilschräge 3a ein kurzes Stück nach oben geschoben wird, um in dem Augenblick, wo die Klappe 2 weit genug geöffnet ist, auf der Schräge 3a herunterzugleiten und aus der Einhängevorrichtung herauszufallen. Dadurch, daß der Bügel 9 angeschoben wird, bevor er die Einhängevorrichtung verläßt, ist unter allen Bedingungen eine sichere Funktionsweise gewährleistet. So ist es beispielsweise ausgeschlossen, daß ein sehr leichter Bügel wegen statischer Aufladung in der Vorrichtung kleben-oder an einer nicht absolut planen Oberfläche hängenbleibt. Dadurch, daß der Schlitz 27 über die vollständige Breite des Grundkörpers 1 reicht, und sich dieser Schlitz außerdem noch zu einer nahezu quadratischen Ausnehmung 13 verbreitert, ist es nicht möglich, daßsich ein Bügelhaken bei derAbgabeverkantet.

## Patentansprüche

1. Einhängevorrichtung für einen Hängeförderer zur Aufnahme eines einzigen Kleiderbügels (9), die zum Freigeben bzw. Abwerfen des Kleiderbügels (9) zu öffnen ist, und aus einem Grundkörper (1) und einer damit um eine rechtwinklig zur Transportrichtung (T) verlaufende Achse (14) schwenkbar befestigten Klappe (2) besteht,
dadurch gekennzeichnet,
daß die Einhängevorrichtung in Transportrichtung (T) offen ist, daß der Haken (10) des Kleiderbügels (9) während des Transports aufgrund von Gravitation auf einer an dem Grundkörper (1) ausgebildeten Schräge (3) aufliegt und sich gegen die zu öffnende Klappe (2) abstützt, daß die sich öffnende Klappe (2) dem Haken (10) des Kleiderbügels (9) eine der Schräge (3) entgegenwirkende Vorschubbewegung erteilt.

2. Einhängevorrichtung nach Anspruch 1,
dadurch gekennzeichnet,
daß die Klappe (2) in ihrer geschlossenen Stellung auf der Schräge (3) aufliegt.

3. Einhängevorrichtung nach Anspruch 2,
dadurch gekennzeichnet,
daß die Schräge (3) eine abgerundete Oberfläche (4) aufweist.

4. Einhängevorrichtung nach Anspruch 2,
dadurch gekennzeichnet,
daß die Schräge (3) durch mehrere hintereinander angeordnete Teilschrägen (3a, 3b, 3c) gebildet wird, deren jeweilige Steigung mit dem Abstand der Teilschräge (3a, 3b, 3c) zur Klappe (2) abnimmt.

5. Einhängevorrichtung nach Anspruch 4,
dadurch gekennzeichnet,
daß sich die Auflagefläche (4a, 4b, 4c) für den Haken (10) des Kleiderbügels (9) der Teilschrägen (3a, 3b, 3c) mit der Nähe zur Klappe (2) vergrößern.

6. Einhängevorrichtung nach Anspruch 2,
dadurch gekennzeichnet,
daß die Länge (L) der Schräge (3) größer ist als der Durchmesser (D) des Hakens (10) des aufzunehmenden Bügels (9).

7. Einhängevorrichtung nach Anspruch 4,
dadurch gekennzeichnet,
daß die der Klappe (2) am nächsten liegende Teilschräge (3a) zu der an sie anschließenden Teilschräge (3b) einen Absatz (5) aufweist, dessen Höhe (H) im wesentlichen dem Drahtdurchmesser (d) des Kleiderbügelhakens (10) entspricht.

8. Einhängevorrichtung nach Anspruch 2,
dadurch gekennzeichnet,
daß der Drehpunkt der Klappe (2) in einervertikal höheren Ebene liegt als ihr Auflagepunkt auf der am Grundkörper (1) ausgebildeten Schräge (3).

9. Einhängevorrichtung nach Anspruch 1,
dadurch gekennzeichnet,
daß die Klappe (2) gegen die Kraft einer Feder (15) öffnet.

10. Einhängevorrichtung nach Anspruch 1,
dadurch gekennzeichnet,
daß die Breite (B) der Anlagefläche (2a) der Klappe (2) für den Bügelhaken (10) größer ist als dessen Durchmesser (D).

11. Einhängevorrichtung nach einem oder mehreren der vorstehenden Ansprüche,
dadurch gekennzeichnet,
daß die Klappe (2) zur Transportrichtung (T) senkrecht beidseitig über den Grundkörper (1) hinausragt.

12. Einhängevorrichtung nach Anspruch 1,
dadurch gekennzeichnet,
daß der Grundkörper (1) von einem einseitig offenen Rechteckprofil mit unterschiedlicher Wandstärke gebildet wird, das an seinem äußeren in Transportrichtung (T) weisenden Ende (1a) zur Aufgabeseite hin mehr als zur Hälfte geschlossen ist und einen zurAufgabeseite des Bügels (9) hin halboffenen Querschnitt aufweist,

13. Einhängevorrichtung nach einem oder mehreren der vorstehenden Ansprüche,
dadurch gekennzeichnet,
daß der Grundkörper (1) und die Klappe (2) aus Kunststoff bestehen.

14. Einhängevorrichtung nach Anspruch 1,
dadurch gekennzeichnet,
daß auf der Oberseite (7) des Grundkörpers (1) eine Steuerkurve (8) ausgebildet ist.

15. Einhängevorrichtung nach Anspruch 15,
dadurch gekennzeichnet,
daß die Steuerkurve (8) durch mehrere hintereinander angeordnete schiefe Ebenen (8a, 8b, 8c) gebildet wird, wobei der von der ersten Ebene (8a) und dem Grundkörper (1) eingeschlossene Winkel (_{T}) kleiner ist als der von der letzten Ebene (8c) und dem Grundkörper (1) eingeschlossene Winkel (ß).

16. Einhängevorrichtung nach einem oder mehreren der vorstehenden Ansprüche,
dadurch gekennzeichnet,
daß der Grundkörper (1) so ausgebildet ist, daß seine relative Lage zur in der Schiene des Hängeförderers laufenden Führungsrolle variabel ist.

17. Einhängevorrichtung nach Anspruch 17, dadurch gekennzeichnet,
daß am Grundkörper (1) ein Vorsprung (11) ausgebildet ist, in dem horizontal mehrere Bohrungen (28) nebeneinander angeordnet sind.

18. Einhängevorrichtung nach einem oder mehreren der vorstehenden Ansprüche,
dadurch gekennzeichnet,
daß der Grundkörper (1) an seiner Unterseite (12) eine über die vollständige Breite verlaufende Ausnehmung (13), die in Grundstellung von der Klappe (2) zumindest teilweise verschlossen ist, aufweist.

## Claims

1. A hanging device for a suspended conveyor to receive a single clothes hanger (9), which is to be opened to release or respectively eject the clothes hanger (9), and which comprises a base body (1) and a flap (2) which is orientably attached thereto about an axis (14) running at right- angles to the conveying direction (T), characterised in that
the hanging device is open in the conveying direction (T),
the hook (10) of the clothes hanger (9) during transportation rests, owing to gravitation, on a bevel (3) constructed on the base body (1), and is supported against the flap (2) which is to be opened,
the flap (2) which is opening gives the hook (10) of the clothes hanger (9) a feed movement acting against the bevel (3).

2. A hanging device according to Claim 1,
characterised in that
the flap (2) rests in its closed position on the bevel (3).

3. A hanging device according to Claim 2,
characterised in that
the bevel (3) has a rounded surface (4).

4. A hanging device according to Claim 2,
characterised in that
the bevel (3) is formed by a plurality of partial bevels (3a, 3b, 3c) arranged one after the other, the respective pitch of which decreases with the distance of the partial bevel (3a, 3b, 3c) to the flap (2).

5. A hanging device according to Claim 4,
characterised in that
the bearing surfaces (4a, 4b, 4c) for the hook (10) of the clothes hanger (9) of the partial bevels (3a, 3b, 3c) increase in size with proximity to the flap (2).

6. A hanging device according to Claim 2,
characterised in that
the length (L) of the bevel (3) is greater than the diameter (D) of the hook (10) of the clothes hanger (9) which is to be received.

7. A hanging device according to Claim 4,
characterised in that
the partial bevel (3a) lying closest to the flap (2) has a shoulder (5) to the partial bevel (3b) adjoining it, the height (H) of which shoulder corresponds substantially to the wire diameter (d) of the clothes hanger hook (10).

8. A hanging device according to Claim 2,
characterised in that
the point of rotation of the flap (2) lies in a vertically higher plane than its resting point on the bevel (3) which is constructed on the base body (1).

9. A hanging device according to Claim 1,
characterised in that
the flap (2) opens against the force of a spring (15).

10. A hanging device according to Claim 1,
characterised in that
the width (B) of the contact surface (2a) of the flap (2) for the clothes hanger hook (10) is greater than its diameter (D).

11. A hanging device according to one or more of the above claims,
characterised in that
the flap (2) projects vertically on both sides with respect to the conveying direction (T) beyond the base body (1).

12. A hanging device according to Claim 1,
characterised in that
the base body (1) is formed by a rectangular section, open on one side, having a different wall thickness, which section is closed at its outer end (1a), pointing in the conveying direction (T), towards the unloading side, by more than half, and has a half-open cross-section towards the unloading side of the clothes hanger (9).

13. A hanging device according to one or more of the above claims,
characterised in that
the base body (1) and the flap (2) comprises plastics material.

14. A hanging device according to Claim 1,
characterised in that
a cam surface (8) is constructed on the upper side (7) of the base body (1).

15. A hanging device according to Claim 15,
characterised in that
the cam surface (8) is formed by a plurality of oblique planes (8a, 8b, 8c) arranged one after the other, in which the angle (i) formed by the first plane (8a) and the base body (1) is smaller than the angle (ß) formed by the last plane (8c) and the base body (1).

16. A hanging device according to one or more of the above claims,
characterised in that
the base body (1) is constructed such that its relative position to the guide roller running in the rail of the suspended conveyor is variable.

17. A hanging device according to Claim 17,
characterised in that
on the base body (1) a projection (11) is constructed, in which a plurality of bores (28) are arranged horizontally adjacent to each other.

18. A hanging device according to one or more of the above claims,
characterised in that
the base body (1) has on its underside (12) a recess (13) running over the complete width, which recess is at least partially closed by the flap (2) in the initial position.

## Revendications

1. Dispositif de suspension pour un convoyeur de produits suspendus, destiné à recevoir un cintre à vêtement (9) unique et à être ouvert pour le libérer ou le laisser tomber (9), et constitué d'un élément de base (1) et d'un volet (2) qui lui estfixé et qui peut pivoter autour d'un axe (14) dirigé perpendiculairement à la direction de transport (T),
caractérisé en ce que le dispositif de suspension est ouvert dans la direction (T) du transport,
en ce que, pendant le transport, le crochet (10) du cintre à vêtement (9) repose, du fait de la gravité, sur une surface inclinée (3) réalisée sur l'élément de base (1) et s'appuie contre le volet ouvrant (2),
en ce que le volet (2), en s'ouvrant, donne au crochet (10) du cintre à vêtement (9) un mouvement de coulissement dirigé en sens contraire de l'effet de la surface inclinée (3).

2. Dispositif de suspension suivant la revendication 1, caractérisé en ce que le volet (2), en position fermée, repose sur la surface inclinée (3).

3. Dispositif de suspension suivant la revendication 2, caractérisé en ce que la surface inclinée (3) présente une surface supérieure (4) arrondie.

4. Dispositif de suspension suivant la revendication 2, caractérisé en ce que la surface inclinée (3) est formée par plusieurs surfaces inclinées élémentaires (3a, 3b, 3c) disposées les unes derrière les autres, dont l'inclinaison respective diminue en même temps que la distance entre chaque surface inclinée élémentaire (3a, 3b, 3c) et rapport au volet (2) augmente.

5. Dispositif de suspension suivant la revendication 4, caractérisé en ce que les surfaces d'appui (4a, 4b, 4c) des surfaces inclinées élémentaires (3a, 3b, 3c) pour le crochet (10) du cintre à vêtement (9) s'élargissent quand on s'approche du volet (2).

6. Dispositif de suspension suivant la revendication 2, caractérisé en ce que la longueur (L) de la surface inclinée (3) est plus grande que le diamètre (D) du crochet (10) du cintre (9) à recevoir.

7. Dispositif de suspension suivant la revendication 4, caractérisé en ce que la surface inclinée élémentaire (3a) qui se trouve le plus près du volet (2) présente un épaulement (5), dont la hauteur (H) correspond essentiellement au diamètre (d) du fil du crochet (10) du cintre à habit.

8. Dispositif de suspension suivant la revendication 2, caractérisé en ce que le point de rotation du volet (2) se trouve, dans un plan vertical, plus haut que son point d'appui sur la surface inclinée (3) réalisée sur l'élément de base (1).

9. Dispositif de suspension suivant la revendication 1, caractérisé en ce que le volet (2) s'ouvre en agissant contre la force d'un ressort (15).

10. Dispositif de suspension suivant la revendication 1, caractérisé en ce que la largeur (B) de la surface d'appui (2a) du volet (2) pour le crochet (10) du cintre est plus grande que le diamètre (D) de ce crochet.

11. Dispositif de suspension suivant l'une quelconque ou plusieurs des revendications précédentes, caractérisé en ce que le volet (2) dépasse, vers l'extérieur, de l'élément de base (1), des deux côtés, perpendiculairement à la direction (T) du transport.

12. Dispositif de suspension suivant la revendication 1, caractérisé en ce que l'élément de base (1) est formé par un profilé rectangulaire ouvert sur un côté, présentant des épaisseurs de paroi différentes, profilé qui, à son extrémité extérieure (1 a) tournée dans la direction (T) du transport, est fermé plus qu'à moitié du côté de chargement, et présente une section à demi ouverte du côté de chargement du cintre (9).

13. Dispositif de suspension suivant l'une quelconque ou plusieurs des revendications précédentes, caractérisé en ce que l'élément de base (1) et le volet (2) sont constitués de matière plastique.

14. Dispositif de suspension suivant la revendication 1, caractérisé en ce qu'une courbe de commande (8) est réalisée, sur la face supérieure (7) de l'élément de base (1).

15. Dispositif de suspension suivant la revendication 15, caractérisé en ce que la courbe de commande (8) est formée de plusieurs plans inclinés (8a, 8b, 8c) disposés les uns derrière les autres, étant entendu que l'angle (tau) compris entre le premier plan (8a) et l'élément de base (1) est plus petit que l'angle (ß) compris entre le dernier plan (8c) et l'élément de base (1).

16. Dispositif de suspension suivant l'une quelconque ou plusieurs des revendications précédentes, caractérisé en ce que l'élément de base (1) est réalisé de telle façon que sa position relative par rapport au galet de guidage circulant dans le rail du convoyeur de produits suspendus peut varier.

17. Dispositif de suspension suivant la revendication 17, caractérisé en ce que, sur l'élément de base (1), est réalisée une saillie (11) dans laquelle plusieurs alésages (28) sont disposés les uns à côté des autres horizontalement.

18. Dispositif de suspension suivant l'une quelconque ou plusieurs des revendications précédentes, caractérisé en ce que l'élément de base (1) présente, sur sa face inférieure (12), un évidement (13), occupant toute la largeur, et qui, en position de base, est fermé, au moins en partie, par le volet (2).
